# FASCICULE DE BREVET EUROPEEN

(11) **EP 1 053 603 B1**
(45) Date de publication et mention de la délivrance du brevet: **02.05.2002**
(21) Numéro de dépôt: 99902599.2
(22) Date de dépôt: 05.02.1999
(51) Int. Cl.: H04B 7/185

(54) **PROCEDE DE SYNCHRONISATION D'UN SYSTEME SPATIAL DE TELECOMMUNICATIONS COMPRENANT AU MOINS UN SATELLITE**
VERFAHREN ZUR SYNCHRONISATION EINER RAUMTELEKOMMUNIKATIONSANORDNUNG MIT MINDESTES EINEM SATELLITE
METHOD FOR SYNCHRONISING A SPACE TELECOMMUNICATION SYSTEM COMPRISING AT LEAST ONE SATELLITE

(30) Priorité: 06.02.1998 FR 9801413
(43) Date de publication de la demande: 22.11.2000
(73) Titulaire: CENTRE NATIONAL D'ETUDES SPATIALES, 75001 Paris (FR)
(72) Inventeur: DIRIS, Jean-Pierre, F-31130 Balma (FR)
(74) Mandataire: Brykman, Georges
(86) Numéro de dépôt international: FR9900250
(87) Numéro de publication internationale: WO9940691

(56) Documents cités:
- EP-A- 0 322 349
- EP-A- 0 632 605
- EP-A- 0 807 829
- WO-A-97/34162
- US-A- 5 528 502

## Description

### Domaine technique

La présente invention concerne un procédé de synchronisation d'un système spatial de télécommunications comprenant au moins un satellite.

### Etat de la technique antérieure

La plupart des systèmes spatiaux de télécommunications envisagés à l'heure actuelle possèdent des systèmes de synchronisation dont l'architecture est basée sur des mesures et des compensations d'écarts de synchronisation satellite/terminal sur les voies montantes et descendantes. Une telle architecture nécessite une gestion complexe par le satellite ou le centre de contrôle associé des différents terminaux utilisateurs et de leurs écarts de synchronisation.

Le document référencé [1] en fin de description décrit différentes fonctions impliquées dans « un contrôle d'orbite autonome » dans le cadre d'une constellation de satellites, à savoir : la détermination de l'orbite et du temps, le calcul des manoeuvres afin de suivre une orbite référence, la réalisation des manoeuvres, le contrôle des manoeuvres. L'utilisation des systèmes de positionnement sur satellites conduit au développement d'un équipement bord spécifique appelé « navigateur ». Cet équipement peut être basé sur deux types de systèmes de positionnement et de synchronisation, par exemple les systèmes DORIS et GPS. Ce document référencé [1] décrit les caractéristiques matérielles générales d'un tel navigateur et ses interfaces avec le satellite.

Le document référencé [2] décrit un procédé et un système de synchronisation d'un réseau de communications, comprenant plusieurs satellites défilants, à partir d'émissions de signaux préalables constitués de salves.

L'invention a pour objet un procédé de synchronisation d'un système spatial de télécommunications comprenant au moins un satellite ayant une architecture de synchronisation simplifiée.

### Exposé de l'invention

La présente invention concerne un procédé de synchronisation d'un système spatial de télécommunications comprenant au moins un satellite et plusieurs terminaux utilisateurs, dans lequel chaque satellite comprend : des moyens d'émission d'informations de synchronisation vers les terminaux utilisateurs ;
caractérisé en ce que chaque satellite comprend en outre :
- des moyens autonomes et temps réel, délivrant des mesures de localisation ;
- des moyens de traitement de ces mesures de manière à lisser celles-ci par un modèle d'orbite ;
et en ce que ledit procédé comprend les étapes suivantes :
- on réalise une mesure de restitution d'orbite précise et en temps réel à bord de chaque satellite ;
- on transmet cette restitution d'orbite du satellite et de temps bord de référence aux terminaux utilisateurs ;
- chacun des terminaux utilisateurs, en communication avec un satellite donné, synchronise alors ses émissions avec ce satellite, en rapport au temps satellite.

La restitution d'orbite peut être basée sur l'exploitation de mesures Doppler issues du système DORIS, ou sur l'exploitation de mesures de pseudo-distances et de pseudo-vitesses issues du système GPS.

Avantageusement chaque terminal en communication avec un satellite effectue les opérations suivantes :
- identification du décalage en temps de sa référence de temps en rapport au temps satellite ;
- calcul théorique du délai de propagation terminal/satellite à partir de l'orbite mesurée du satellite et de la position du terminal ;
- émission du signal de télécommunications informationnel montant terminal/satellite à la date requise par le satellite, le signal étant précompensé en fréquence du Doppler et en temps de l'écart de synchronisation.

L'invention repose sur la mise en oeuvre d'un moyen d'orbitographie précis et temps réel à bord de chaque satellite.

Le couplage de l'orbite précise à bord et de l'architecture de synchronisation du système de télécommunications permet une simplification significative des charges utiles des satellites de télécommunications et une amélioration de performances des systèmes de communications.

L'invention s'applique principalement à des systèmes de communications entre une constellation de satellites et un grand nombre de terminaux sol utilisateurs. Elle peut s'appliquer également à un service de télécommunications fourni par un ou plusieurs satellite à défilement.

Les principaux avantages de l'invention se situent à trois niveaux du système de télécommunications : diminution de la complexité des satellites, gain en efficacité spectrale des liaisons terminaux/satellites, relaxation de contraintes au niveau du terminal.

### Complexité satellite

Les tâches à réaliser par chaque satellite dans le cadre d'une synchronisation classique, qui disparaissent dans le cas d'une synchronisation par navigateur comme dans l'invention, sont principalement les suivantes :
- Mesure de l'écart de synchronisation entre le satellite et chaque terminal connecté, ce qui nécessite un ensemble de corrélateurs (matériel).
- Calcul de l'écart de synchronisation pour chaque terminal, ce qui nécessite des ressources en puissance de calcul (logiciel, matériel)
- Gestion des adresses des différents terminaux connectés pour le transfert des écarts de synchronisation sur la liaison descendante, ce qui nécessite des interconnexions entre les parties régénération des données et commutation des données sur le satellite, complexifiant par là même sa constitution (logiciel, matériel).

A cet accroissement de complexité du satellite, dans le cadre d'une synchronisation classique, correspond, dans le cas d'une synchronisation par navigateur comme dans l'invention, la seule mise en oeuvre d'un équipement de restitution d'orbite précise sur chaque satellite.

### Efficacité spectrale

Le gain en efficacité spectrale se traduit de la manière suivante :

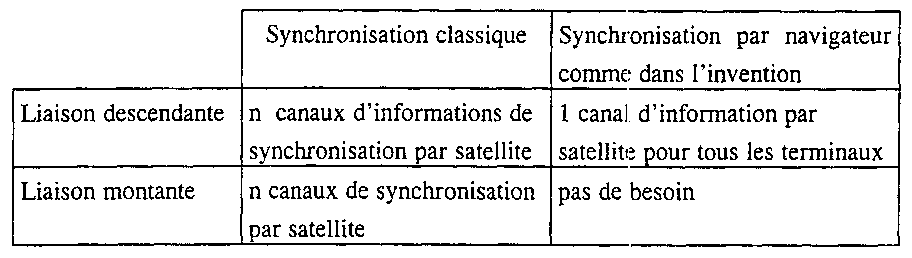

n étant le nombre de terminaux connectés à un satellite.

Le gain en efficacité spectrale est certain puisque dans le cadre de la synchronisation par navigateur comme dans l'invention seule une liaison descendante par satellite est nécessaire, cette liaison étant identique pour tous les terminaux.

### Terminal utilisateur

La connaissance de l'orbite précise du satellite permet, dans le cas de satellites à défilement, un assouplissement de la contrainte de pointage du terminal.

En effet, en l'absence d'une telle information, le terminal se pointe sur le satellite grâce aux éphémérides théoriques qu'il possède en mémoire. Ces éphémérides sont d'une certaine imprécision, ce qui nuit au bilan de pointage du terminal (en sus de l'imprécision « physique » de pointage).

Dans le cas d'une synchronisation par navigateur comme dans l'invention, le terminal reçoit l'orbite très précise et temps réel du satellite, ce qui permet de calculer très précisément ses consignes de pointage. Seule reste alors l'imprécision « physique » de pointage (erreur d'asservissement liée aux coupleurs et actuateurs).

En regard de cette simplification du terminal, le procédé de synchronisation par navigateur selon l'invention ne nécessite que quelques ressources (logiciel) afin de permettre le calcul par chaque terminal du délai de propagation satellite/terminal.

### Brève description

- La figure 1 illustre l'architecture d'un système de télécommunications ;
- la figure 2 illustre le fonctionnement du procédé de synchronisation d'un système de télécommunications, selon l'invention ;
- les figures 3A et 3B illustrent respectivement l'étape de synchronisation et l'étape de transmission d'un procédé de synchronisation terminal/satellite classique, en fonctionnement boucle fermée ;
- la figure 4 illustre l'unique étape, regroupant synchronisation puis transmission, du procédé de synchronisation terminal/satellite avec navigateur selon l'invention, en fonctionnement boucle ouverte.

### Exposé détaillé de modes de réalisation

La présente invention concerne un procédé de synchronisation d'un système de télécommunications comportant au moins un satellite, par exemple une constellation de satellites, utilisant une mesure d'orbite temps réel et précise de chaque satellite.

L'orbite précise temps réel à bord de chaque satellite est transmise aux terminaux utilisateurs, ce qui simplifie grandement l'architecture de télécommunications en permettant à chaque terminal utilisateur de synchroniser ses émissions en rapport au temps satellite. Cette orbite précise est acquise au moyen d'un équipement spécifique, appelé navigateur bord, reposant sur des mesures de localisation et un filtrage temps réel de ces mesures par un modèle très précis d'orbite.

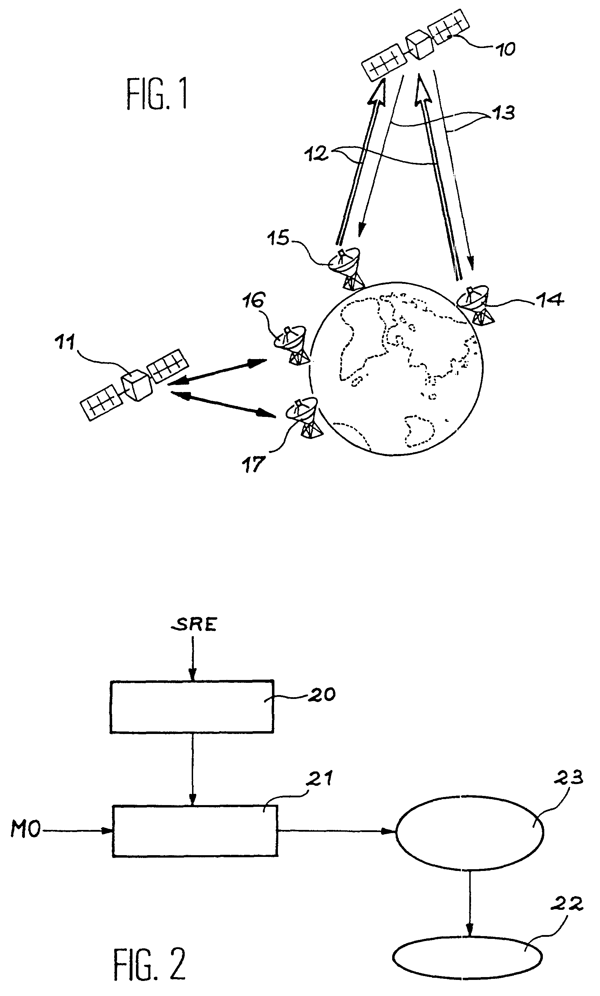

L'architecture de synchronisation proposée est illustrée sur la figure 1.

Sur cette figure sont représentés deux satellites 10 et 11, d'une constellation de satellites, en communication avec plusieurs terminaux utilisateurs 14 à 17.

A bord de chaque satellite 10 est calculée une orbitographie précise et en temps réel.

La communication descendante satellite 10 / terminal 14 ou 15 contient les informations d'orbite du satellite et le temps bord de référence.

La communication montante 12 terminal 14 ou 15 / satellite 10 est, alors, une communication pré-compensée.

Ainsi l'orbitographie précise est effectuée à bord de chaque satellite puis transmise aux terminaux dans le signal descendant satellite/terminal.

La date d'émission requise pour chaque terminal est aussi transmise par le satellite. Chaque terminal en communication avec le satellite effectue les opérations suivantes :
- identification du décalage en temps de sa référence de temps en rapport au temps satellite ;
- calcul théorique du délai de propagation terminal/satellite à partir de l'orbite mesurée du satellite et de la position du terminal ;
- émission du signal de télécommunications informationnel montant terminal/satellite à la date requise par le satellite, ce signal étant précompensé en fréquence du Doppler et en temps de l'écart de synchronisation.

En adoptant ce mode de synchronisation, l'ensemble des informations issues des terminaux arrivent au satellite de manière synchrone par rapport à l'horloge du satellite. L'invention permet de simplifier par là même les étages de démodulation et de traitement numérique de la charge utile de chaque satellite. En outre chaque terminal est traité de manière indifférenciée par le satellite, réduisant ainsi la complexité de la gestion bord de chaque satellite.

### Restitution d'orbite à bord

L'invention est basée sur la présence à bord des satellites d'un moyen autonome, ou navigateur bord, de restitution d'orbite précise et temps réel. Plusieurs modes de réalisation de ce moyen sont envisageables et notamment les suivants :
- La restitution d'orbite est basée sur l'exploitation de mesures Doppler issues du système DORIS, développé et mis en oeuvre par le CNES (Centre National d'Etudes Spatiales). Ce système comprend un réseau de cinquante trois balises bifréquences réparties sur la surface terrestre.
- La restitution d'orbite est basée sur l'exploitation de mesures de pseudo-distances et pseudo-vitesses issues du système GPS (ou « Global Positioning System ») du Département de la défense des USA. Ce système comprend une constellation de vingt quatre satellites répartis sur des orbites à 20 200 Km, d'inclinaison 55°.

L'élaboration des informations précises d'orbite dans le navigateur bord est réalisée comme illustrée sur la figure 2. Dans ce navigateur bord les signaux radioélectriques externes SRE sont traités dans un module 20 de réception et d'élaboration de signaux de mesure (Doppler DORIS, Pd et PvGPS). Un module 21 de filtrage d'orbite reçoit ces signaux de mesure ainsi qu'un modèle d'orbite Mo et délivre des signaux d'orbite temps réel, de datation et de synchronisation qui sont envoyés aux terminaux utilisateurs 22 via la charge utile de télécommunication 23 du satellite.

Ainsi les mesures de localisation (DORIS, GPS) sont lissées par un modèle d'orbite afin de fournir des informations de synchronisation : orbite précise temps réel, datation et synchronisation par rapport à une référence de temps universelle. Ces informations sont utilisées directement par la charge utile de télécommunications et transmises aux terminaux utilisateurs.

La précision de l'orbite, restituée en temps réel à bord, dépend de l'orbite du satellite porteur et peut atteindre quelques mètres (en orbite basse par exemple).

La mise en oeuvre de cette fonction à bord de chaque satellite peut être réalisée par un équipement, ou navigateur bord, dont les contraintes d'implantation et les coûts associés sont adaptables à une large gamme de satellites porteurs. En effet un tel équipement peut avoir une masse de quelques kilogrammes (≤ 5 kg), un volume de quelques litres (≤ 5 l), et une consommation de quelques dizaines de Watt (≤ 20 W).

### Méthode de synchronisation

Le besoin générique en terme de synchronisation satellite/terminaux utilisateurs pour les systèmes de communications s'exprime généralement par une nécessité de réception synchrone à bord de chaque satellite des communications provenant des terminaux utilisateurs. Cette réception synchrone est souvent qualifiée de « symbol-synchronous » engendrant par là même un besoin de synchronisation précise entre les différentes communications reçues par le satellite. L'invention permet d'exploiter au mieux la liaison de télécommunications, en réduisant, en particulier, les bandes de garde au minimum.

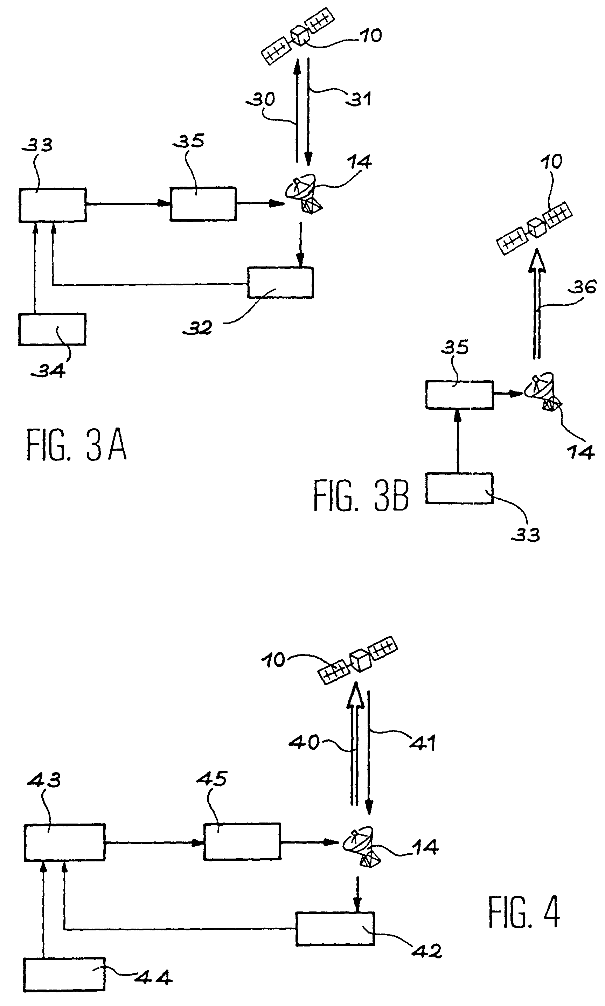

Pour réaliser cette synchronisation, un procédé classique de synchronisation terminal/satellite classique (boucle fermée) généralement utilisé, tel que décrit par exemple dans le document référencé [2], est illustré sur les figures 3A et 3B : la figure 3A illustrant une première étape de synchronisation, et la figure 3B illustrant une seconde étape de transmission.

Dans un tel procédé le terminal se synchronise de manière grossière en utilisant sa localisation et les éphémérides théoriques des satellites de la constellation. Il transmet ensuite une trame de synchronisation qui permet au satellite en visibilité de mesurer son écart de synchronisation avec le terminal. Cet écart est ensuite transmis par le satellite, via une liaison descendante, à chaque terminal utilisateur qui peut ainsi le précompenser avant l'émission de la trame de synchronisation suivante. Cette boucle de synchronisation peut être répétée plusieurs fois en fonction de la précision de synchronisation à atteindre. Ce n'est qu'un fois la synchronisation établie pour chaque terminal, qu'un terminal utilisateur donné peut débuter sa communication avec un autre terminal utilisateur (émission d'un signal de communication sur la voie montante).

Le fonctionnement détaillé d'une boucle de synchronisation est explicité ci-après.

Comme illustré sur la figure 3A, dans l'étape de synchronisation, le terminal 14 envoie une trame de synchronisation 30 (une pour chaque terminal).

Le satellite 10 effectue une mesure de l'écart de synchronisation réel bord/sol. Il réalise alors une transmission 31 de l'écart de synchronisation réel bord/sol vers le terminal utilisateur 14. Le signal est reçu par le récepteur 32. Un microprocesseur 33 reçoit l'écart de synchronisation réel bord/sol en provenance du récepteur 32 et un signal en provenance de l'horloge locale 34, et il émet une trame de synchronisation compensée en temps de l'écart de synchronisation réel vers un étage de modulation et d'émission 35. L'écart de synchronisation bord/sol est alors compensé.

Comme illustré sur la figure 3B dans l'étape de transmission le microprocesseur 33 émet un signal de communication compensé en temps de l'écart de synchronisation réel vers le modulateur émetteur 35. Ce signal 36 émis vers le satellite par le terminal 14 est un signal large bande.

L'invention proposée permet un mode de réalisation simplifié de la synchronisation entre chaque satellite et l'ensemble des terminaux utilisateurs qui lui sont connectés, comme illustré sur la figure 4. Une seule étape regroupe la synchronisation puis la transmission.

En effet, la restitution d'orbite précise temps réel effectuée à bord de chaque satellite est transmise à l'ensemble des terminaux utilisateurs. Le temps bord de référence est aussi transmis sur la liaison descendante. Chaque terminal utilisateur reçoit ces informations et les traite afin de synchroniser son horloge locale sur le temps bord satellite.

En particulier, le microprocesseur de gestion du terminal calcule le délai de propagation théorique satellite/terminal grâce aux informations d'orbite du satellite et de position du terminal.

Le terminal est alors capable d'émettre directement sa communication avec un autre utilisateur (sur la voie montante) en précompensant, à l'émission, l'écart de synchronisation entre les horloges satellite et terminal, et le délai de propagation terminal/satellite.

Comme illustré sur la figure 4 selon l'invention, dans une même étape regroupant synchronisation puis émission, le satellite transmet des informations 41 d'orbite temps réel et de temps bord de référence (identiques pour tous les terminaux utilisateurs) vers le terminal 14. Ces signaux sont entrés sur un récepteur 42. Un microprocesseur 43 reçoit les signaux d'orbite satellite et de temps bord en provenance de ce récepteur 42, ainsi qu'un signal issu d'une horloge locale 44. Il émet un signal de communication compensé en temps de l'écart de synchronisation temps bord/terminal vers un modulateur émetteur 45. Le terminal 14 émet, alors, un signal de communication 40 en bande large vers le satellite 10.

### REFERENCES

[1] « Autonomous Orbit Determination And Control In Constellations Of Satellites » de J.P. Diris, J. Fourcade, C. Jayles, T. Tournier, L. Lefebre, J. Dulac et N. Dubernet (« Mission Design and Implementation Of Satellite Constellations, 17-19 Novembre,Toulouse, International Astronautical Federation)
[2] EP-A-0 632 605 (NEC CORPORATION)

## Revendications

1. Procédé de synchronisation d'un système spatial de télécommunications comprenant au moins un satellite et plusieurs terminaux utilisateurs, chaque satellite comprenant :
- des moyens (21) d'émission d'informations de synchronisation vers les terminaux utilisateurs (22) ;
**caractérisé en ce que** chaque satellite comprend en outre :
- des moyens (20) autonomes et temps réel, délivrant des mesures de localisation ;
- des moyens de traitement de ces mesures de manière à lisser celles-ci par un modèle d'orbite ;
et **en ce que** ledit procédé comprend les étapes suivantes :
- à bord de chaque satellite est réalisée une mesure de restitution d'orbite précise et en temps réel ;
- cette restitution d'orbite du satellite et le temps bord référence sont transmis aux terminaux utilisateurs ;
- chacun des terminaux utilisateurs, en communication avec un satellite donné, synchronise alors ses émissions avec ce satellite, en rapport au temps satellite.

2. Procédé selon la revendication 1, dans lequel la restitution d'orbite est basée sur l'exploitation de mesures Doppler issues du système DORIS.

3. Procédé selon la revendication 1, dans lequel la restitution d'orbite est basée sur l'exploitation de pseudo-distances et de pseudo-vitesses issues du système GPS.

4. Procédé selon la revendication 1, dans lequel chaque terminal en communication avec un satellite effectue les opérations suivantes :
- identification du décalage en temps de sa référence de temps en rapport au temps satellite ;
- calcul théorique du délai de propagation terminal/satellite à partir de l'orbite mesurée du satellite et de la position du terminal ;
- émission du signal de télécommunications informationnel montant terminal/satellite à la date requise par le satellite, le signal étant précompensé en fréquence du Doppler et en temps de l'écart de synchronisation.

## Patentansprüche

1. Verfahren zur Synchronisation eines Weltraum-Telekommunikationssystems mit mindestens einem Satelliten und mehreren Benutzerstationen, wobei jeder Satellit aufweist:
- Mittel (21) zum Senden von Synchronisationsinformationen an die Benutzerstationen (22);
**dadurch gekennzeichnet, dass** jeder Satellit zusätzlich aufweist:
- autonome Echtzeitmittel (20), welche Messungen zur Ortsbestimmung liefern,
- Mittel zur Bearbeitung dieser Messungen, derart, dass diese durch ein Umlaufbahnmodell geglättet bzw. angeglichen werden;
und dass das genannte Verfahren die folgenden Schritte umfaßt:
- an Bord eines jeden Satelliten wird eine genaue Bestimmungsmessung der Umlaufbahn in Echtzeit durchgeführt;
- diese Bestimmung der Umlaufbahn des Satelliten und die Bordreferenzzeit werden den Benutzerstationen übermittelt;
- jede in Kommunikation mit einem bestimmten Satelliten stehende Benutzerstation synchronisiert nunmehr ihre Übertragungen mit diesem Satelliten in Bezug auf die Satellitenzeit.

2. Verfahren nach Anspruch 1, bei welchem die Bestimmung der Umlaufbahn auf der Auswertung von Dopplermessungen beruht, die von dem DORIS-System abgeleitet werden.

3. Verfahren nach Anspruch 1, bei welchem die Bestimmung der Umlaufbahn auf der Auswertung von Pseudo-Distanzen und von Pseudo-Geschwindigkeiten beruht, die von dem GPS-System abgeleitet werden.

4. Verfahren nach Anspruch 1, bei dem jede mit einem Satelliten in Verbindung stehende Station die folgenden Schritte ausführt:
- Identifizierung der Zeitverschiebung ihrer Bezugszeit im Vergleich mit der Satellitenzeit;
- theoretische Berechnung der Laufzeit Station/Satellit auf der Grundlage der gemessenen Umlaufbahn des Satelliten und der Position der Station;
- Sendung des aufsteigenden Nachrichten-Informationssignals Station/Satellit zu dem vom Satelliten angeforderten Zeitpunkt, wobei das Signal in der Dopplerfrequenz und in der Synchronisations-Zeitabweichung vorkompensiert ist.

## Claims

1. Method for synchronizing a space telecommunications system comprising at least one satellite and several user terminals, wherein each satellite comprises:
- means (21) for transmitting synchronization information to the user terminals (22);
**characterized in that** each satellite also comprises:
- autonomous, real time means (20) supplying localization measurements;
- means for processing these measurements so as to smooth them by an orbit model;
and **in that** said method comprises the following stages:
- an accurate and real time orbit restitution measurement is performed on-board each satellite;
- this restitution of the satellite orbit and reference on-board time is transmitted to the user terminals;
- each of the user terminals, communicating with a given satellite, then synchronizes its transmissions with this satellite, with respect to satellite time.

2. Method according to claim 1, wherein orbit restitution is based on using Doppler measurements produced by the DORIS system.

3. Method according to claim 1, wherein orbit restitution is based on using pseudo-distances and pseudo-speeds produced by the GPS system.

4. Method according to claim 1, wherein each terminal communicating with a satellite performs the following operations;
- identifying the time shift of its time reference with respect to satellite time;
- theoretically calculating the terminal/satellite propagation delay from the measured orbit of the satellite and the terminal position;
- transmitting the terminal/satellite up-link information telecommunications signal at the date required by the satellite, the signal being pre-compensated for Doppler frequency and synchronization offset time.
